# EUROPÄISCHE PATENTSCHRIFT

(11) **EP 1 127 913 B1**
(45) Veröffentlichungstag und Bekanntmachung des Hinweises auf die Patenterteilung: **03.01.2007**
(21) Anmeldenummer: 01101422.2
(22) Anmeldetag: 23.01.2001
(51) Int. Cl.: C08J 9/00, C08L 75/04

(54) **Verfahren zur Herstellung von Polyurethan-Schaumstoffen**
Process for preparing polyurethane foams
Procédé de préparation de mousses de polyuréthanne

(30) Priorität: 12.02.2000 DE 10006340
(43) Veröffentlichungstag der Anmeldung: 29.08.2001
(73) Patentinhaber: BASF Aktiengesellschaft, 67056 Ludwigshafen (DE)
(72) Erfinder: Bruchmann, Bernd, Dr., 67251 Freinsheim (DE); Becker, Armin, Dr., 67259 Grossniedesheim (DE); Lutter, Heinz-Dieter, Dr., 49356 Diepholz (DE); Scherzer, Dietrich, Dr., 67433 Neustadt (DE); Schäfer, Harald, Dr., 68199 Mannheim (DE)

(56) Entgegenhaltungen:
- EP-A- 0 704 474
- EP-A- 0 894 814
- DATABASE CHEMABS [Online] CHEMICAL ABSTRACTS SERVICE, COLUMBUS, OHIO, US; KAJITANI, NOBORU ET AL: "Hydrophilic polyurethane foams" retrieved from STN Database accession no. 83:207018 CA XP002169698 & JP 50 100196 A (NIPPON SODA CO., LTD., JAPAN) 8. August 1975 (1975-08-08)
- DATABASE CHEMABS [Online] CHEMICAL ABSTRACTS SERVICE, COLUMBUS, OHIO, US; FUKUSHIMA, YASUO: "Perfumed polyurethane foams" retrieved from STN Database accession no. 83:148358 CA XP002169699 & JP 50 010848 A (JAPAN) 4. Februar 1975 (1975-02-04)

## Beschreibung

Die Erfindung betrifft ein Verfahren zur Herstellung von Polyurethan-Schaumstoffen durch Umsetzung von aliphatischen Isocyanaten mit Verbindungen mit mindestens zwei mit Isocyanatgruppen reaktiven Wasserstoffatomen.

Polyurethan-Schaumstoffe sind seit langem bekannt und vielfach in der Literatur beschrieben. Ihre Herstellung erfolgt üblicherweise durch Umsetzung von Isocyanaten mit Verbindungen mit mindestens zwei mit Isocyanatgruppen reaktiven Wasserstoffatomen. Als Isocyanate werden zumeist aromatische Di- und Polyisocyanate verwendet, wobei Isomere des Toluylendiisocyanats (TDI), Isomere des Diphenylmethandiisocyanats (MDI) sowie Mischungen aus Diphenylmethandiisocyanat und Polymethylen-polyphenylen-polyisocyanaten (Roh-MDI) die größte technische Bedeutung haben.

Derartige Polyurethan-Schaumstoffe auf der Basis von aromatischen Isocyanaten neigen jedoch unter Einwirkung von Licht zur Vergilbung. Diese Neigung zur Vergilbung ist für viele Anwendungsgebiete störend. Es ist bekannt, daß Polyurethane, zu deren Herstellung aliphatische Isocyanate eingesetzt werden, lichtstabil sind und praktisch keinerlei Vergilbung zeigen. Nachteilig bei der Verwendung von aliphatischen Isocyanaten zur Herstellung von Polyurethan-Schaumstoffen ist jedoch, daß die so hergestellten Schaumstoffe in vieler Hinsicht, insbesondere in ihren mechanischen Eigenschaften, solchen auf der Basis von aromatischen Isocyanaten zumeist deutlich unterlegen sind. Insbesondere auf Grund der unzureichenden Ausbildung von Hart- und Weichphasensegmenten im auspolymerisierten Schaum kommt es zu Einbußen in wesentlichen Materialeigenschaften, wie Dehnung, Zugfestigkeit und Flexibilität.

So beschreibt WO 98/52987 die Herstellung von lichtechten Polyurethan-Schaumstoffen unter Verwendung von aliphatischen Isocyanaten, wobei als Verbindung mit mindestens zwei mit Isocyanatgruppen reaktiven Wasserstoffatomen hydrierte Polydiendiole eingesetzt werden. Derartige Diole sind jedoch im Vergleich zu den üblicherweise verwendeten Alkoholen teurer. Außerdem zeigen diese Schaumstoffe unter Lichteinwirkung eine Verschlechterung ihrer mechanischen Eigenschaften und werden klebrig.

In EP-A-911 354 werden lichtechte Polyurethan-Schaumstoffe beschrieben, die unter Verwendung von aliphatischen Isocyanaten hergestellt werden. Als Polyolkomponente werden bei den in EP-A-911 354 beschriebenen Schaumstoffen auch Polyole beschrieben, die durch in-situ-Polymerisation von olefinisch ungesättigten Monomeren in Polyetheralkoholen hergestellt werden. Als olefinisch ungesättigtes Monomere zur Herstellung dieser Polyole wird allerdings Styrol mitverwendet, das durch seinen aromatischen Ring ebenfalls zur Vergilbung der Schaumstoffe führt.

In DE 198 20 917 werden Polyurethanschaumstoffe beschrieben, denen Polyethylenwachse zugesetzt wurden, um die Staubentwicklung beim Bearbeiten, insbesondere Schneiden, der Schaumstoffe zu vermindern und gute Oberflächen nach dem Schneiden zu erhalten. Hierbei wird auch die Herstellung von aliphatischen Schaumstoffen erwähnt. Nachteilig an diesem Verfahren ist, daß die beschriebenen Wachse mit der Zeit aus dem Schaumstoff migrieren können.

Aufgabe der vorliegenden Erfindung war es, lichtstabile Polyurethan-Schaumstoffe bereitzustellen, die gute mechanische Eigenschaften aufweisen sowie unter Verwendung von in der Polyurethanchemie üblichen Ausgangsstoffen hergestellt werden können.

Überraschenderweise wurde gefunden, daß Polyurethan-Schaumstoffe unter Verwendung aliphatischer Isocyanate hergestellt werden können, wenn die Umsetzung in Gegenwart von polymeren Substanzen erfolgt, die eine Gerüstbildung im Polyurethanschaum bewirken.

Gegenstand der Erfindung ist demzufolge ein Verfahren zur Herstellung von Polyurethan-Schaumstoffen durch Umsetzung von Isocyanaten mit Verbindungen mit mindestens zwei mit Isocyanatgruppen reaktiven Wasserstoffatomen, dadurch gekennzeichnet, daß als Isocyanate (cyclo)aliphatische Isocyanate eingesetzt werden und die Umsetzung in Gegenwart von lichtechten Substanzen erfolgt, die eine Gerüstbildung im Polyurethanschaum bewirken und die über funktionelle Gruppen in die Polyurethanmatrix eingebaut werden, ausgewählt aus der Gruppe, enthaltend Polymerisate aus (Meth)Acrylsäure, veresterte Polyacrylsäuren, Polymethyl(meth)acrylate, Polyhydroxy(meth)-acrylate, Polyvinylamine, Polyethylenimine, Polyvinylalkohole sowie Copolymerisate der genannten Verbindungen mit anderen olefinisch ungesättigten Monomeren und die ein Molekulargewicht Mw im Bereich zwischen 500 und 50 000 Da aufweisen, oder nicht in die Polyurethanmatrix eingebaut werden, ausgewählt aus der Gruppe, enthaltend Polyethylen, Polypropylen, Polyoxymethylen, Polyamid, Polycarbonat, Polyvinylacetat, Polyvinylchlorid, Polyvinylpyrrolidon, Polytetrafluorethylen, Polybutadien, Polyisopren und Polyacrylnitril, und die ein Molekulargewicht Mw im Bereich zwischen 10000 und 500000 Da aufweisen.

Gegenstand der Erfindung sind weiterhin Polyurethan-Schaumstoffe, herstellbar nach dem erfindungsgemäßen Verfahren. Die Erfindung ist für alle Typen von Polyurethan-Schaumstoffen einsetzbar, es können sowohl Weichschäume, Hartschäume oder Integralschäume hergestellt werden.

Unter "lichtecht" werden Substanzen verstanden, die auch nach langer Lichteinwirkung keinerlei Farbveränderung, auch als Vergilbung bezeichnet, aufweisen.

Als lichtechte Substanzen, die eine Gerüstbildung im Polyurethanschaum bewirken, werden insbesondere organische Polymere verwendet. Bevorzugt eingesetzt werden solche organischen Polymere, die in mindestens einer der Einsatzkomponenten zur Herstellung der Polyurethanschaumstoffe löslich oder dispergierbar sind. Vorzugsweise erfolgt der Zusatz der Substanzen, die eine Gerüstbildung im Polyurethanschaum bewirken, zur der Komponente, welche die Verbindungen mit mindestens zwei mit Isocyanatgruppen reaktiven Wasserstoffatomen enthält, der sogenannten Polyolkomponente.

Überraschenderweise sind die so erhaltenen Polyolkomponenten hinreichend lagerstabil, das heißt, in einem produktionsrelevanten Zeitraum von 24 h findet keine Entmischung der Polyolkomponente statt.

Dabei ist es vorteilhaft, wenn die funktionellen Gruppen der Substanzen, die eine Gerüstbildung im Polyurethanschaum bewirken, nicht mit den funktionellen Gruppen der Einsatzkomponente, in der sie gelöst oder dispergiert sind, reagieren können, da es ansonsten zu einer Vernetzung der Einsatzkomponente und dadurch zu einem starken Anstieg der Viskosität und Problemen bei der Verarbeitung kommen kann.

Die Menge der Substanzen, die eine Gerüstbildung im Polyurethanschaum bewirken, sollte so bemessen sein, daß ein spürbarer Aufbau des Schaumgerüstes stattfindet, andererseits die bekannt guten Produkteigenschaften der Polyurethane nicht überlagert werden und die Viskosität der Polyurethan-Aufbaukomponenten, in die diese Substanzen eingebracht werden, nicht so stark ansteigt, daß eine Verarbeitung dieser Substanzen erschwert oder gar unmöglich gemacht wird. Die Untergrenze der Menge an Substanzen, die die Stabilität des Polyurethanschaums gewährleisten, beträgt vorzugsweise 0,1 Gew.-%, besonders bevorzugt 0,5 Gew.-%, jeweils bezogen auf das Gewicht des Polyurethan-Schaumstoffs. Die Obergrenze der Menge an Substanzen, die die Stabilität des Polyurethanschaums gewährleisten, beträgt vorzugsweise 50 Gew.-%, besonders bevorzugt 30 Gew.-%, jeweils bezogen auf das Gewicht des Polyurethan-Schaumstoffs.

Zu den zur Durchführung des erfindungsgemäßen Verfahrens notwendigen Einsatzstoffen sowie den Hilfs- und Zusatzstoffen ist im einzelnen folgendes zu sagen.

Als Polyisocyanate können die üblichen und bekannten (cyclo)-aliphatischen Di-, Tri- und Polyisocyanate eingesetzt werden. Beispiele für (cyclo)aliphatische Di- oder Tri-isocyanate sind Tetramethylendiisocyanat-1,4, Hexamethylendiisocyanat-1,6, Isophorondiisocyanat, 2-Methyl-pentamethylendiisocyanat, 2,2,4- oder 2,4,4-Trimethyl-1,6-hexamethylen-diisocyanat, 2-Butyl-2-ethylpentamethylendiisocyanat, 1,4-Diisocyanatocyclohexan, 3-Isocyanatomethyl-1-methyl-1-isocyanatocyclohexan, Isocyanatopropylcyclohexylisocyanat, Xylylendiisocyanat, Tetramethylxylylendiisocyanat, Bis-(4-isocyanatocyclohexyl)-methan, Lysinesterisocyanate, 1,3- oder 1,4-Bis(isocyanatomethyl)cyclohexan, 4-Isocyanatomethyl-1,8-octamethylendiisocyanat sowie deren Mischungen oder die daraus hergestellten Oligo- oder Polyisocyanate. Die Oligo- oder Polyisocyanate lassen sich herstellen aus den genannten Di- oder Triisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen.

Als Verbindung mit mindestens zwei aktiven Wasserstoffatomen werden insbesondere Polyesteralkohole und vorzugsweise Polyetherole mit einer Funktionalität von 2 bis 8, insbesondere von 2 bis 4, vorzugsweise 2 bis 3 und einem mittleren Molekulargewicht im Bereich von 400 bis 10000 Da, vorzugsweise 1000 bis 8000 Da eingesetzt. Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glyzerin oder Trimethylolpropan sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Zu den polymermodifizierten Polyetheralkoholen gehören auch Polyharnstoffdispersionen enthaltende Polyetheralkohole.

Bevorzugt werden für das erfindungsgemäße Verfahren solche Polyetheralkohole eingesetzt, die primäre Hydroxylgruppen aufweisen, insbesondere solche mit einem Ethylenoxidblock am Kettenende oder solche, die nur auf Ethylenoxid basieren.

Zu den Verbindungen mit mindestens zwei aktiven Wasserstoffatomen gehören auch die Kettenverlängerungs- und Vernetzungsmittel, die gegebenenfalls mitverwendet werden können. Als Kettenverlängerungs- und Vernetzungsmittel werden vorzugsweise 2- und 3-funktionelle Alkohole mit Molekulargewichten unter 400 Da, insbesondere im Bereich von 60 bis 150 Da, verwendet. Beispiele sind Ethylenglykol, Propylenglykol, Diethylenglykol und Butandiol-1,4. Als Vernetzungsmittel können auch Diamine eingesetzt werden. Falls Kettenverlängerungs- und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Zur Durchführung des erfindungsgemäßen Verfahrens können weitere Einsatzstoffe, insbesondere Katalysatoren, Treibmittel sowie Hilfs- und/oder Zusatzstoffe mitverwendet werden, zu denen im einzelnen folgendes zu sagen ist:

Als Katalysatoren für die Herstellung der erfindungsgemäßen Polyurethan-Schaumstoffe werden die üblichen und bekannten Polyurethanbildungskatalysatoren eingesetzt, beispielsweise organische Zinnverbindungen, wie Zinndiacetat, Zinndioctoat, Dialkylzinndilaurat, und/oder stark basische Amine wie Triethylamin, Pentamethyldiethylentriamin, Tetramethyldiaminoethylether, Imidazole oder vorzugsweise Triethylendiamin. Die Katalysatoren werden vorzugsweise in einer Menge von 0,01 bis 5 Gew.-%, vorzugsweise 0,05 bis 2 Gew.-%, eingesetzt.

Als Treibmittel zur Herstellung der Polyurethan-Schaumstoffe wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlendioxid, Kohlenwasserstoffe, wie n-, iso- oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%.

Als Hilfsmittel und/oder Zusatzstoffe werden beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteristatisch wirkende Substanzen eingesetzt.

Bei der technischen Herstellung von Polyurethan-Schaumstoffen ist es üblich, die Verbindungen mit mindestens zwei aktiven Wasserstoffatomen und die weiteren Einsatzstoffe sowie Hilfs- und/oder Zusatzstoffe vor der Umsetzung zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate mit den Verbindungen mit mindestens zwei aktiven Wasserstoffatomen im Beisein der erfindungsgemäßen gerüstbildenden Substanzen sowie der genannten Treibmittel, Katalysatoren und Hilfs- und/oder Zusatzstoffe (Polyolkomponente) zur Reaktion gebracht, wobei die erfindungsgemäßen Polymere, die eine Gerüstbildung im Schaum bewirken, vorzugsweise der Polyolkomponente zugesetzt werden.

Bei der Herstellung der erfindungsgemäßen Polyurethane werden Isocyanat- und Polyolkomponente in einer solchen Menge zusammengebracht, daß das Äquivalenzverhältnis von Isocyanatgruppen zur Summe der aktiven Wasserstoffatome 0,7 : 1 bis 1 : 1,25, vorzugsweise 0,8 : 1 bis 1 :1,20 beträgt.

Die Herstellung der Polyurethan-Schaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt werden. Die Komponenten werden vorzugsweise bei einer Temperatur im Bereich zwischen 15 bis 120°C, vorzugsweise 20 bis 80°C vermischt und in das Formwerkzeug beziehungsweise auf die Bandstraße gebracht. Die Temperatur im Formwerkzeug liegt zumeist im Bereich zwischen 15 und 120°C, vorzugsweise zwischen 30 und 80°C.

Die nach dem erfindungsgemäßen Verfahren hergestellten Polyurethan-Schaumstoffe zeichnen sich aus durch sehr gute mechanische Eigenschaften, die denen von Schaumstoffen auf Basis von aromatischen Isocyanaten entsprechen. Darüber hinaus besitzen sie eine weisse Eigenfarbe und eine hervorragende Lichtstabilität.

Die Erfindung soll an nachstehenden Beispielen näher erläutert werden.

### Beispiele 1 bis 6

Aus den in Tabelle 1 angegebenen Verbindungen wird zunächst eine Polyolkomponente hergestellt. Diese und die ebenfalls in Tabelle 1 angegebene Isocyanatkomponente werden getrennt voneinander auf 60°C erwärmt, bei dieser Temperatur zusammengegeben, mit einem Rührer homogenisiert und in eine auf 60°C erwärmte, geschlossene Form mit den Abmessungen 40 x 40 x 10 cm gegeben. Der entstandene Schaum wird bei 60°C ausgehärtet.

Die Eigenschaften der erfindungsgemäßen Schaumstoffe sind in den Tabellen 2 und 3 festgehalten.

**Tabelle 1: Angabe der Komponenten zur Herstellung der erfindungsgemäßen Schaumstoffe in Gew.-%.**

| Beispiel | 1 | 2 | 3 | 4 | 5 | 6 |
|---|---|---|---|---|---|---|
| Basonat HI 100 | 37,0 | | | 37,8 | | |
| Basonat P LR 8926 | | 39,2 | 39,9 | | 31,7 | 41,9 |
| Lupranol 1200 | 18,5 | 17.8 | 18,2 | 18,9 | | 19,5 |
| Lupranol 2045 | 30,8 | 29,7 | 30,2 | 31,4 | | 31,9 |
| Lupranol 2043 | | | | | 56,0 | |
| Lupranol 3402 | | | | | 1,7 | |
| Pluriol E 400 | | | | | 1,7 | |
| Sokalan PA 40 | 6,2 | 5,9 | 6,1 | 6,3 | | 6,3 |
| Sokalan HP 50 | 5,5 | 5,3 | | 5,7 | | |
| Superabsorber | | | 5,4 | | | |
| Lumitol H 136¹⁾ | | | | | 6,8 | |
| DBTL | 0,2 | 0,2 | 0,2 | 0,2 | 0,4 | 0,4 |
| Lupragen N 206 | | | | | 0,7 | |
| DC 193 | | | | | 0,35 | |
| Cyclohexan | 1,9 | 1,8 | | | | |
| Wasser | | | | | 0,70 | |

| | | | | | | |
|---|---|---|---|---|---|---|
| 1) Das Lumitol wurden vor dem Einsatz vom Lösungsmittel befreit Einsatzstoffe: Basonat^{®} HI 100: Polyisocyanat aus Hexamethylendiisocyanat (HDI), NCO-Gehalt 22,0 Gew.-% Basonat^{®} P LR 8926: Polyisocyanat aus HDI, NCO-Gehalt 19,0 Gew.-% Lupranol^{®} 1200: Polyoxypropylendiol, Hydroxylzahl 250 mg KOH/g Lupranol^{®} 2045: Polyoxypropylen-polyoxyethylentriol, Hydroxylzahl 35 mg KOH/g Lupranol^{®} 2043: Polyoxypropylen-polyoxyethylentriol, Hydroxylzahl 29 mg KOH/g Lupranol^{®} 3402: Tetrol, Hydroxylzahl 470 mg KOH/g Pluriol^{®} E 400: Polyoxyethylendiol, Hydroxylzahl 280 mg KOH/g Sokalan^{®} PA 40: feste Polyacrylsäure, Mw 15000 g/mol Sokalan^{®} HP 50: festes Polyvinylpyrrolidon, Mw 40000 g/mol Superabsorber: Polyacrylsäure-Natriumsalz, Mw 20 000 g/mol Lumitol^{®} H 136: OH-Acrylatharz, Festgehalt 70 %, Hydroxylzahl 135 mg KOH/g DBTL: Dibutylzinn-dilaurat Lupragen^{®} N 206: Bis(N,N-dimethylaminoethyl)ether, 70%ig in Dipropylenglykol DC 193: DABCO^{®} DC 193, Silikonstabilisator, Firma Air Products | | | | | | |

Die mit ^{®} gekennzeichneten Produkte mit Ausnahme von DABCO^{®} DC 193 sind Produkte der BASF Aktiengesellschaft

**Tabelle 2: Kenndaten der erfindungsgemäßen Schaumstoffe**

| Beispiel | 1 | 2 | 3 | 4 | 5 | 6 |
|---|---|---|---|---|---|---|
| Dichte (g/l) nach DIN EN ISO 845 | 180,00 | 151,00 | 246,00 | 230,00 | 186,00 | 202,00 |
| Druckverformungsrest, 23°C, 50 % Stauchung, 72 h Belastung (%) (nach DIN 53572) | 0,22 | 0,44 | 0,66 | 1,27 | 0,47 | 0,13 |
| Druckverformungsrest, 70°C, 50 % Stauchung, 22 h Belastung (%) (nach DIN 53572) | 2,75 | 2,45 | 5,41 | 3,00 | 0,56 | 3,76 |
| Zugfestigkeit (kPa) (nach DIN 53571) | Zugfestigkeit (kPa) 52,30 | 21,30 | 63,10 | 70,60 | 45,90 | 57,20 |
| Stauchhärte (kPa) bei 40% (nach DIN 53577) | 22,50 | 7,40 | 32,70 | 49,70 | 17,80 | 17,60 |
| Weiterreissversuch nach Graves (kPa) (nach DIN 53515) | 225,00 | 104,00 | 254,00 | 327,00 | 181,00 | 201,00 |
| Rückprallelastizität (%) nach DIN 53573 | 27,80 | 36,50 | 41,60 | 23,70 | 36,10 | 38,20 |

Bestrahlungs-Test nach ISO 4892 - 2: der erfindungsgemäße Schaumstoff Nr. 5 wurde vergleichend zu einem handelsüblichen Polyurethan-Weichschaumstoff auf Basis Toluylendiisocyanat in der Bestrahlungsapparatur X 450 der Fa. Heraeus geprüft. Dabei wurden Muster der beiden Schaumstoffe mit den Abmessungen 60 x 50 x 10 mm einem 5 tägigen Test unterworfen und anschliessend die Verfärbung mittels Yellowness-Index bestimmt. Der Schaumstoff auf Basis des aromatischen Isocyanats war nach dem Test braun verfärbt, während der erfindungsgemäße Schaumstoff keine sichtbare Verfärbung zeigte.

**Tabelle 3: Yellowness-Indices der bestrahlten Proben**

| Yellowness-Index nach ASTM D 1925 - 70 (1988) | Schaum Nr. 5 (erfindungsgemäß) | TDI-Schaum (Vergleich) |
|---|---|---|
| 0 d | 4,9 | 5,6 |
| 5 d | 8,3 | 79,9 |

## Patentansprüche

1. Verfahren zur Herstellung von Polyurethan-Schaumstoffen durch Umsetzung von Isocyanaten mit Verbindungen mit mindestens zwei mit Isocyanatgruppen reaktiven Wasserstoffatomen, **dadurch gekennzeichnet, daß** als Isocyanate (cyclo)-aliphatische Isocyanate eingesetzt werden und die Umsetzung in Gegenwart von lichtechten organischen Polymeren erfolgt, die eine Gerüstbildung im Polyurethanschaum bewirken, und die über funktionelle Gruppen in die Polyurethanmatrix eingebaut werden, ausgewählt aus der Gruppe, enthaltend Polymerisate aus (Meth)Acrylsäure, veresterte Polyacrylsäuren, Polymethyl(meth)acrylate, Polyhydroxy(meth)-acrylate, Polyvinylamine, Polyethylenimine, Polyvinylalkohole sowie Copolymerisate der genannten Verbindungen mit anderen olefinisch ungesättigten Monomeren und die ein Molekulargewicht Mw im Bereich zwischen 500 und 50 000 Da aufweisen, oder nicht in die Polyurethanmatrix eingebaut werden, ausgewählt aus der Gruppe, enthaltend Polyethylen, Polypropylen, Polyoxymethylen, Polyamid, Polycarbonat, Polyvinylacetat, Polyvinylchlorid, Polyvinylpyrrolidon, Polytetrafluorethylen, Polybutadien, Polyisopren und Polyacrylnitril, und die ein Molekulargewicht Mw im Bereich zwischen 10000 und 500000 Da aufweisen.

2. Verfahren nach Anspruch 1, **dadurch gekennzeichnet, daß**
die Substanzen, die eine Gerüstbildung im Polyurethanschaum bewirken, in einer Menge von 0,1 Gew.-% bis 50 Gew.-%, bezogen auf das Gewicht des Polyurethan-Schaumstoffs, eingesetzt werden.

3. Verfahren nach Anspruch 1, **dadurch gekennzeichnet, daß**
die Substanzen, die eine Gerüstbildung im Polyurethanschaum bewirken, in einer Menge von 0,5 Gew.-% bis 30 Gew.-%, bezogen auf das Gewicht des Polyurethan-Schaumstoffs, eingesetzt werden.

4. Verfahren nach Anspruch 1, **dadurch gekennzeichnet, daß**
die Substanzen, die eine Gerüstbildung im Polyurethanschaum bewirken, den Verbindungen mit mindestens zwei mit Isocyanatgruppen reaktiven Wasserstoffatomen zugesetzt werden.

5. Polyurethan-Schaumstoffe, herstellbar nach einem der Ansprüche 1 bis 4.

## Claims

1. A process for producing polyurethane foams by reacting isocyanates with compounds having at least two hydrogen atoms which are reactive toward isocyanate groups, wherein the isocyanates used are (cyclo)aliphatic isocyanates and the reaction is carried out in the presence of lightfast organic polymers which effect framework formation in the polyurethane foam and are incorporated into the polyurethane matrix via functional groups are selected from the group consisting of polymers of (meth)acrylic acid, esterified polyacrylic acids, polymethyl (meth)acrylates, polyhydroxy(meth)acrylates, polyvinylamines, polyethylenimines, polyvinyl alcohols and copolymers of these compounds with other olefinically unsaturated monomers and have a molecular weight Mw in the range from 500 to 50,000 Da or are not incorporated into the polyurethane matrix and are selected from the group consisting of polyethylene, polypropylene, polyoxymethylene, polyamide, polycarbonate, polyvinyl acetate, polyvinyl chloride, polyvinylpyrrolidone, polytetrafluoroethylene, polybutadiene, polyisoprene and polyacrylonitrile and have a molecular weight Mw in the range from 10,000 to 500,000 Da.

2. The process according to claim 1, wherein the substances which effect framework formation in the polyurethane foam are used in an amount of from 0.1% by weight to 50% by weight, based on the weight of the polyurethane foam.

3. The process according to claim 1, wherein the substances which effect framework formation in the polyurethane foam are used in an amount of from 0.5% by weight to 30% by weight, based on the weight of the polyurethane foam.

4. The process according to claim 1, wherein the substances which effect framework formation in the polyurethane foam are added to the compounds having at least two hydrogen atoms which are reactive toward isocyanate groups.

5. A polyurethane foam which can be produced according to any of claims 1 to 4.

## Revendications

1. Procédé de préparation de mousses de polyuréthanne par réaction d'isocyanates avec des composés comportant au moins deux atomes d'hydrogène réactifs vis-à-vis des groupes isocyanate, **caractérisé en ce que**, comme isocyanates, on met en oeuvre des isocyanates (cyclo)-aliphatiques et la réaction a lieu en présence de polymères organiques résistant à la lumière qui provoquent une formation de squelette dans la mousse de polyuréthanne, et qui par l'intermédiaire de groupes fonctionnels sont incorporés dans la matrice de polyuréthanne, en étant choisis parmi le groupe comprenant des polymères d'acide (méth)acrylique, des acides polyacryliques estérifiés, des poly(méth)acrylates de méthyle, des polyhydroxy(méth)-acrylates, des polyvinylamines, des polyéthylèneimines, des alcools polyvinyliques ainsi que des copolymères des composés cités avec d'autres monomères oléfiniquement insaturés, et qui présentent un poids moléculaire Mw d'un ordre compris entre 500 et 50 000 Da, ou qui ne sont pas incorporés dans la matrice de polyuréthanne, en étant choisis parmi le groupe comprenant du polyéthylène, du polypropylène, du polyoxyméthylène, du polyamide, du polycarbonate, du polyacétate de vinyle, du polychlorure de vinyle, de la polyvinylpyrrolidone, du polytétrafluoroéthylène, du polybutadiène, du polyisoprène et du polyacrylonitrile, et qui présentent un poids moléculaire Mw d'un ordre compris entre 10 000 et 500 000 Da.

2. Procédé suivant la revendication 1, **caractérisé en ce que** les substances, qui provoquent une formation de squelette dans la mousse de polyuréthanne, sont mises en oeuvre en une quantité de 0,1 % en poids à 50 % en poids, par rapport au poids de la mousse de polyuréthanne.

3. Procédé suivant la revendication 1, **caractérisé en ce que** les substances, qui provoquent une formation de squelette dans la mousse de polyuréthanne, sont mises en oeuvre en une quantité de 0,5 % en poids à 30 % en poids, par rapport au poids de la mousse de polyuréthanne.

4. Procédé suivant la revendication 1, **caractérisé en ce que** les substances, qui provoquent une formation de squelette dans la mousse de polyuréthanne, sont ajoutées aux composés comportant au moins deux atomes d'hydrogène réactifs vis-à-vis des groupes isocyanate.

5. Mousses de polyuréthanne, qui peuvent être préparées suivant l'une des revendications 1 à 4.
